# EUROPEAN PATENT APPLICATION

(11) **EP 3 992 610 A1**
(43) Date of publication of application: **04.05.2022**
(21) Application number: 20204986.2
(22) Date of filing: 30.10.2020
(51) Int. Cl.: G01N 21/03, B01L 3/00, B01F 11/02, B01F 13/00, G01N 21/17

(54) **A PROCESS PHOTOMETER ARRANGEMENT**

(71) Applicant: Hach Lange GmbH, 14163 Berlin (DE)
(72) Inventor: GOLITZ, Andreas, 14163 Berlin (DE); MINKE, Sebastian, 14163 Berlin (DE); HAHN, Markus Dr., 14163 Berlin (DE); JONAK, Andreas, 14163 Berlin (DE); LENHARD, Markus Dr., 14163 Berlin (DE); DE HEIJ, Bas, 14163 Berlin (DE); RUDDE, Heinz, 14163 Berlin (DE); SCHWENK, Andreas, 14163 Berlin (DE); HEUWOLD, Maik, 14163 Berlin (DE); BERGMANN, Sven, 14163 Berlin (DE)
(74) Representative: terpatent Patentanwälte ter Smitten Eberlein-Van Hoof Rütten Daubert

(57) **Abstract**

Disclosed is a process photometer arrangement (10) with a photometric cuvette unit (20) comprising a cuvette body (24) defining a cuvette cavity (25) and a combined sample inlet/outlet opening (34), a photometer light inlet window (60) and a photometer light outlet window (62). The cuvette body (24) is movably supported by a cuvette body support element (88) and the cuvette unit (20) is provided with a cuvette vibration device (80) for vibrating the cuvette body (24) to thereby quickly and homogenously mix a liquid sample volume (31) within the cuvette cavity (25) without any separate mixing element within the cuvette cavity.

This allows a short mixing action within a microfluidic cuvette.

## Description

The invention refers to a process photometer arrangement with a photometric cuvette unit and a photometer unit for optically measuring a light absorbance of a prepared liquid sample within the cuvette unit.

The liquid sample is prepared for being measured by mixing the raw liquid sample with a reagent which reacts with an analyte of the raw liquid sample to thereby change the colour of the prepared liquid sample. Since the photometric measurement of the colour change of the prepared liquid sample is generally provided only punctually, a homogeneous mixing of the raw liquid sample with the reagent is essential to avoid dramatic misinterpretations of the photometric measurement result.

A process photometer arrangement can be a part of a closed-loop control circuit in a drinking water plant or a waste water plant. Therefore, if the process photometer arrangement works batch-wise, a high measurement frequency can be an essential requirement of a process photometer arrangement so that there is not much time for a homogeneous mixing of the raw liquid sample with the reagent.

US 7 662 342 B2 discloses a process photometer arrangement with a photometric cuvette unit comprising a rotating mixing body within the cuvette body to actively and quickly mix the raw liquid sample with the liquid reagent. However, a separate rotating mixing body within the cuvette cavity defined by the cuvette body makes the flushing and cleaning of the cuvette cavity more difficult and is no option for a relatively small cuvette cavity. Therefore, a separate rotating mixing body within a cuvette is not available for micro-fluidic applications allowing to reduce the reagent consumption.

It is an object of the invention to provide a process photometer arrangement with a reduced reagent consumption and a potentially high measurement frequency.

This object is solved with a process photometer arrangement with the features of claim 1.

The process photometer arrangement according to the invention is provided with a photometric cuvette unit comprising a cuvette body defining an interior cuvette cavity. The cuvette body is provided with a sample inlet opening and a sample outlet opening through which the liquid sample is flowing into the cuvette cavity and, after being photometered, is pumped out of the cuvette cavity. The sample inlet opening and the sample outlet opening can be defined by one single combined sample inlet/outlet opening. The cuvette body is provided with a photometer light inlet window and a photometer light outlet window. The measurement light of a photometer unit is coupled through the light inlet window in the liquid sample within the cuvette cavity, and is coupled out through the light outlet window from the liquid sample within the cuvette cavity.

The photometer unit can be a monochromatic photometer, but preferably is a spectromatic photometer allowing to measure the absorption/extinction with measurement light of different wavelengths.

The liquid reagent is added to the raw liquid sample either before the raw liquid sample is pumped into the cuvette cavity or after the liquid sample has been pumped into the cuvette cavity.

The cuvette body is movably supported by a cuvette body support element so that the cuvette body is movable within a range of maximally a few millimeters in at least in one direction. The cuvette body support element can be, for example, one or more elastic spring sheet or any other means which is suitable to movably support the cuvette body.

The cuvette unit is also provided with a cuvette vibration device for vibrating the cuvette body to thereby homogenously mix the prepared liquid volume within the cuvette cavity. After the liquid reagent has been added to the raw liquid sample and after the prepared liquid sample has been pumped into the cuvette cavity, the cuvette vibration device is activated to vibrate the cuvette body so that the prepared liquid sample volume is moved and vibrated within the cuvette cavity. As a consequence, the mixing of the liquid sample with the liquid reagent is significantly speeded up so than a homogeneous mixing of the prepared liquid sample is realized within a few a minutes or even less. Preferably, no movable mixing body is provided within the cuvette cavity. The cuvette vibration device itself can also define the cuvette body support element so that no separate cuvette body support element would be necessary.

The cuvette vibration device allows even for a very small cuvette cavity, and in particular for micro-fluidic photometric cuvette units, to reliably and quickly mix the prepared sample volume within the cuvette cavity so that a high measurement frequency can be realized.

According to a preferred embodiment of the invention, the cuvette vibration device generates a cuvette vibration frequency of between 1 to 500 Hz. The cuvette vibration frequency can change during a mixing interval or can be static. Preferably, the cuvette vibration device generates a linear cuvette vibration, more preferably a linear cuvette vibration with a nominal vibration amplitude of 0.1 to 5.0 mm. The vibration amplitude during a mixing interval can vary or can be static. A linear cuvette vibration can be absolutely sufficient for reliably and quickly realize a homogeneous mix of the prepared liquid sample volume and is technically a relatively simple and cost-effective solution.

Preferably, the cuvette body defines at least one inclined interior sidewall being inclined with an inclination angle of between 15° and 75° with respect to a vertical axis. By providing at least one inclined interior sidewall at the interior cuvette cavity, the liquid sample volume within the cuvette cavity is more intensively mixed during the vibration of the cuvette body.

More preferably, the cuvette body defines two opposite parallel vertical interior sidewalls and two opposite inclined interior sidewalls. Both inclined interior sidewalls are inclined to define a V-shaped funnel between them and the vertical interior sidewalls. The liquid outlet opening is provided at the bottom of the V-shaped funnel so that the interior cuvette cavity has no dead volumes. After the photometric measurement of the mixed liquid sample, the liquid sample smoothly flows out of the cuvette cavity through the sample outlet opening along the vertical and the inclined sidewalls so that no relevant volume of the liquid sample remains with in the cuvette cavity. This concept of a cuvette cavity with no horizontal bottom wall can be the subject matter of an independent invention, i.e. without being combined with the cuvette vibration device.

Preferably, the cuvette vibration device is a linear horizontal vibration device. The linear horizontal vibration axis substantially lies in the V-plane and is parallel to the vertical interior sidewalls. As a result, the inert mass of the liquid sample volume within the cuvette cavity is lifted up and down the inclined sidewalls so that an effective liquid mixing dynamics is realized.

According to a preferred embodiment, the cuvette cavity is fluidically closed so that, during the vibration of the cuvette body, spilling of the liquid sample is avoided. However, the fluidically closed cuvette cavity is at least provided with the sample inlet opening and the sample outlet opening.

Preferably, the cuvette body is provided with a venting opening for providing an air cushion above the liquid sample volume within the cuvette cavity during the cuvette vibration caused by the cuvette vibration device. An air cushion above the liquid sample volume within the cuvette cavity is essential for an effective mixing of the liquid sample volume within the cuvette cavity during the mixing interval. The venting opening allows a gas, preferably air, to flow in and out of the fluidically closed cuvette cavity to provide an air cushion above the liquid sample volume. The venting opening is open at least during the filling phase and during the draining/emptying phase.

According to a preferred embodiment, the cuvette vibration device is provided with an electromagnet which is driven by a frequency generator. The electromagnet can be provided as a static part whereas the electromagnetic counterpart of the electromagnet can be provided fixed to the cuvette body. The electromagnetic counterpart is preferably a permanent magnet. With an electromagnet driven by a frequency generator different vibration frequencies and vibration amplitudes can easily be generated with a cost effective device.

According to a preferred embodiment, the cuvette body is provided with a reagent inlet opening for directly applying a liquid reagent into the cuvette cavity. More preferably, the cuvette body can be provided with two, three or even more reagent inlet openings for applying different liquid reagents into the cuvette cavity. The liquid reagent is directly applied into the cuvette cavity.

Preferably, the cuvette body is provided with a flushing liquid opening. The flushing liquid opening can be identical with the venting opening. The flushing liquid can be pumped into the cuvette cavity after a photometric measurement and after the liquid sample has been pumped out of the cuvette cavity. The flushing liquid allows to quickly flush, rinse and clean the cuvette cavity sidewalls so that the cuvette unit is ready for the next photometric measurement procedure after a relatively short cleaning interval.

Generally the process photometer arrangement can provide a continuous photometric measurement, in particular, if the sample inlet opening and the sample outlet opening are provided separately. Preferably the process photometer arrangement works batch-wise.

Preferably, the cuvette cavity has a total volume of less than 0.5 ml. More preferably, the cuvette cavity has a micro-fluidic volume which is less than 0.2 ml. In a cuvette cavity being smaller than 0.5 ml it is difficult, if not impossible, to provide a separate mixing body within the cuvette cavity. The cuvette vibration device therefore allows in particular for a microfluidic process photometer arrangement an effective and homogeneous mixing of the raw liquid sample with the liquid reagent.

Preferably, the photometer light inlet window and the photometer light outlet window are provided at sidewalls of the cuvette cavity, and are provided preferably in-line with each other at vertical sidewalls of the cuvette cavity.

According to a preferred embodiment, the process photometer arrangement is provided with an electronic control unit comprising a sample filling level control unit being connected to a photometer unit for controlling the liquid sample filling level within the cuvette cavity. The photometer unit is used for the photometric measurement process as well as for controlling the sample filling level during the filling process step. Controlling the liquid sample filling level is important to guarantee a sufficient filling of the cuvette cavity with the liquid sample as well as to guarantee a sufficiently large air cushion above the liquid sample volume.

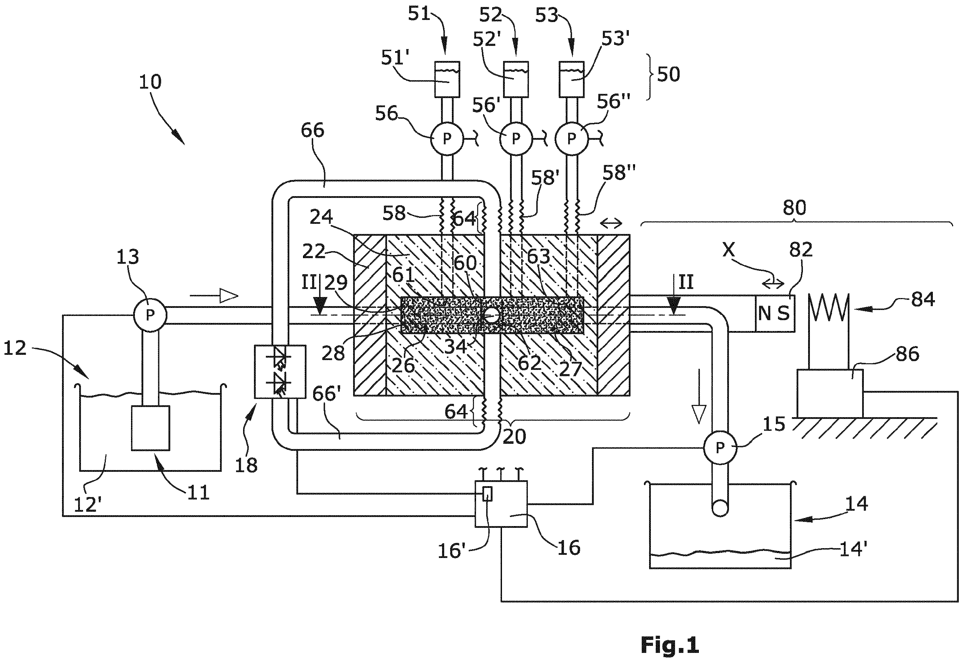

One embodiment of the invention is described with reference to the enclosed drawings, wherein
figure 1 shows schematically a process photometer arrangement with a photometric cuvette unit including a cuvette vibration device in a horizontal cross-section I-I, and

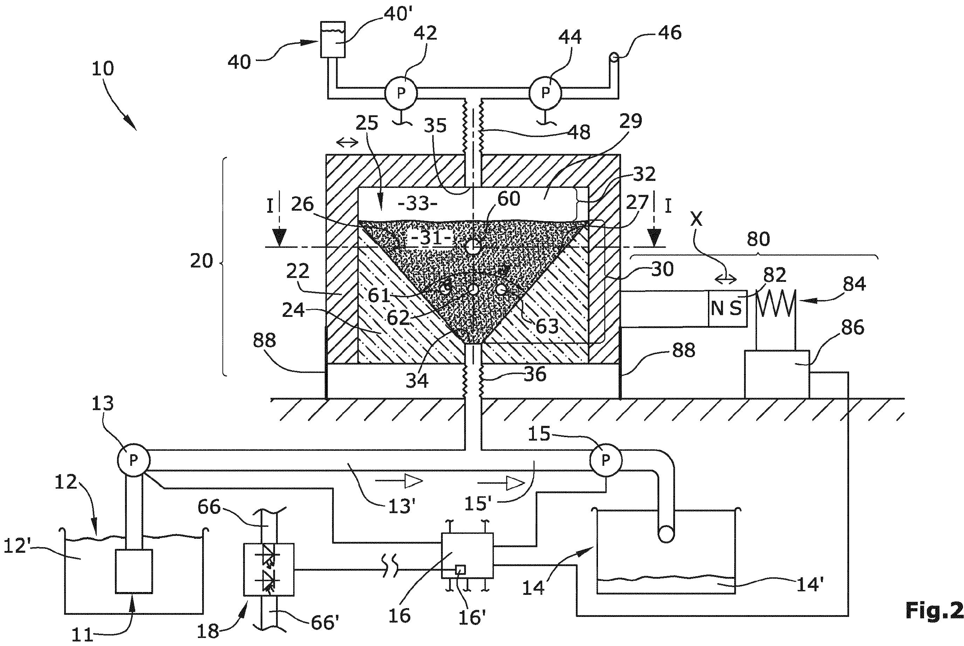

figure 2 shows schematically the process photometer arrangement with the photometric cuvette unit in a vertical cross section II-II.

The figures show a microfluidic process photometer arrangement 10 for quantitatively determining the concentration of several different analytes of wastewater 12' in a waste water tank 12 of a waste water plant.

A raw liquid sample of the wastewater 12' is pumped by a sample pump 13 through an immersed sample filter element 11 to the process photometer arrangement 10. After the process photometer arrangement 10 has provided one or more photometric measurement actions, the liquid sample is pumped by a drain pump 15 from the process photometer arrangement 10 to a drain tank 14 where the measured liquid samples volume 14' are accumulated. If the used reagent quantity is not harmful for the environment, the liquid sample alternatively can be pumped back into the wastewater tank 12 after the photometric measurement actions. The process photometer arrangement 10 is a part of a closed-loop circuit to control one or more analyte of the waste water plant. The process photometer arrangement 10 works, in this embodiment, batch-wise.

The process photometer arrangement 10 is provided with a photometric cuvette unit 20 and with a cuvette vibration device 80. The photometric cuvette unit 20 is substantially defined by a transparent cuvette body 24 defining an interior cuvette cavity 25. The cuvette body 24 is at least partially shielded by a shielding body 22 to optically shield the cuvette cavity 25 against external light.

The cuvette cavity 25 is defined by two inclined interior sidewalls 26,27 being inclined with an inclination angle a of 45° with respect to a vertical axis and by two vertical interior sidewalls 28, 29 being parallel and opposite to each other. The inclined interior sidewalls 26,27 define a V-shaped funnel between the vertical interior sidewalls 28,29. One single combined liquid inlet/outlet opening 34 is provided at the bottom of the V-shaped funnel. At the top of the cuvette cavity 25, a venting opening 35 is defined by the cuvette body 24 for venting and flushing the cuvette interior cavity 25. The venting opening 35 is fluidically connected via a flexible line section 48 and a flushing pump 42 to a flushing liquid tank 40 comprising a flushing liquid 40' and alternatively via a venting pump 44 to an atmosphere opening 46. The cuvette cavity 25 has a total volume of 50 to 70 µl.

Three reagent inlet openings 61,62,63 are provided at one vertical interior sidewall 29 for applying three different reagents 51',52',53' into the cuvette cavity 25. The liquid reagents 51',52',53' are stored in corresponding reagent tanks 51,52,53 defining a reagent unit 50 and can be pumped separately by corresponding reagent pumps 56,56,56" from the corresponding reagent tank 51,52,53 into the cuvette cavity 25.

The reagent lines are provided with flexible reagent line sections 58,58',58" for mechanically coupling the corresponding reagent line to the cuvette body 24 which is movably supported by two cuvette body support elements 88 which are elastic sheet spring elements.

The combined inlet/outlet opening 34 is connected to the pumps 13,15 by a flexible tube section 36.

The photometer arrangement 10 is provided with a spectrometric photometer unit 18 which is optically coupled by optical fiber elements 66, 66' and flexible fiber sections 64 to a photometer light inlet window 60 and a photometer light outlet window 62 at the vertical interior cuvette sidewalls 28, 29. The photometer light inlet window 60 and the photometer light outlet window 62 are arranged in-line to each other.

The photometer arrangement 10 is provided with a cuvette vibration device 80 vibrating the cuvette body 24 with a varying vibration frequency between 10 and 200 Hz and with a varying vibration amplitude of 1.0 to 3.0 mm in a horizontal linear vibration axis x. The cuvette vibration device 84 is provided with a static electromagnet 84 which is driven by a frequency generator 86 and with a permanent magnet 82 which is fixed to the cuvette body 24 which is elastically movable in the horizontal linear vibration axis x.

The photometer arrangement 10 is controlled by a control unit 16 comprising a sample filling level control unit 16' which is electronically connected to the photometer unit 18 for controlling the liquid sample filling level within the cuvette cavity 25. The control unit 16 substantially controls the pumps 13,15,42,44,56,56',56", the photometer unit 18 and the frequency generator 86 of the cuvette vibration device 80.

The process photometer arrangement 10 works batch-wise, so that a measurement sequence starts with the pump 13 pumping a raw liquid sample from the tank 12 to the cuvette cavity 25. The venting pump 44 pumps air from the cuvette cavity 25 to the atmosphere. The rising level of the raw liquid sample within the cavity 25 is controlled by the sample filling level control unit 16'. The sample pumping action is stopped as soon as the liquid level within the cuvette cavity 25 is above the light inlet window 60 and the light outlet window 62 so that an air cushion 32 remains above the liquid volume 31 with in the cuvette cavity 25.

The control unit 16 activates the respective reagent pump 56 to pump the needed reagent liquid 51' into the cuvette cavity 25. Subsequently, the control unit 16 activates the cuvette vibration device 80 which generates a varying vibration frequency of 10 to 200 Hz with a varying vibration amplitude of 1 to 3 mm for about one minute. The prepared sample volume 30 within the cuvette cavity 25 is thereby continuously mixed. During the mixing action, the photometer 18 is working already and detects the shifting of the measurement value with a particular discrete measurement wavelength. As soon as the shifting of the measurement value stops, the vibration device 80 is stopped and a final absorption measurement is provided, and the final measurement value is stored.

After that, the liquid volume 30 with the cuvette cavity 25 is pumped out of the cavity 25 by the drain pump 15 until the cuvette cavity 25 is empty. Finally, the cuvette cavity 25 is cleaned by flushing the cuvette cavity 25 with a cleaning/flushing liquid 40 pumped by the corresponding pump 42 into the cuvette 25 and by finally pumping the flushing liquid to the drain tank 14. The cuvette unit 20 is now ready for the following measurement sequence.

## Claims

1. A process photometer arrangement (10) with a photometric cuvette unit (20) comprising a cuvette body (24) defining an cuvette cavity (25) and a sample inlet opening (34), a sample outlet opening (34), a photometer light inlet window (60) and a photometer light outlet window (62),
wherein the cuvette body (24) is movably supported by a cuvette body support element (88) and the cuvette unit (20) is provided with a cuvette vibration device (80) for vibrating the cuvette body (24) to thereby homogenously mix a liquid sample volume (31) within the cuvette cavity (25).

2. The process photometer arrangement (10) according to claim 1, wherein the cuvette vibration device (80) generates a cuvette vibration frequency of 1 to 500 Hz.

3. The process photometer arrangement (10) according to one of the preceding claims, wherein the cuvette vibration device (80) generates a linear cuvette vibration, preferably with a nominal vibration amplitude of 0.1 to 5.0 mm.

4. The process photometer arrangement (10) according to one of the preceding claims, wherein the cuvette body (24) defines at least one inclined interior side wall (26,27) being inclined with an inclination angle (a) of between 15° and 75° with respect to a vertical.

5. The process photometer arrangement (10) according to claim 4, wherein the cuvette body (24) defines two opposite parallel vertical interior sidewalls (28,29) and two opposite inclined interior side walls (26,27) both being inclined to define a V-shaped funnel between the vertical interior sidewalls (28, 29), wherein the liquid outlet opening (34) is provided at the bottom of the V-shaped funnel.

6. The process photometer arrangement (10) according to claim 4 or 5, wherein the cuvette vibration device (80) is a linear horizontal vibration device (80) and the linear horizontal vibration axis (X) is substantially lying in the V-plane and parallel to the vertical interior sidewalls (28, 29).

7. The process photometer arrangement (10) according to one of the preceding claims, wherein the cuvette cavity (25) is fluidically closed.

8. The process photometer arrangement (10) according to one of the preceding claims, wherein the sample inlet opening and the sample outlet opening are defined by one single combined inlet/outlet opening (34).

9. The process photometer arrangement (10) according to one of the preceding claims, wherein the cuvette body (24) is provided with a venting opening (35) for providing an air cushion (33) above the sample volume (31) in the cuvette cavity (25) during the cuvette vibration caused by the vibration device (80).

10. The process photometer arrangement (10) according to one of the preceding claims, wherein the cuvette vibration device (80) is provided with an electromagnet (84) which is driven by a frequency generator (86).

11. The process photometer arrangement (10) according to one of the preceding claims, wherein the cuvette body (24) is provided with a reagent inlet opening (61,62,63) for directly applying a liquid reagent (51', 52', 53') into the cuvette cavity (25).

12. The process photometer arrangement (10) according to one of the preceding claims, wherein the cuvette body (24) is provided with a flushing liquid opening (35).

13. The process photometer arrangement (10) according to one of the preceding claims, wherein the cuvette cavity (25) has a total volume of less than 0.5 ml.

14. The process photometer arrangement (10) according to one of the preceding claims, wherein the photometer light inlet window (60) and the photometer light outlet window (62) is provided at sidewalls (28, 29) of the cuvette cavity (25).

15. The process photometer arrangement (10) according to one of the preceding claims, comprising a control unit (16) with a sample filling level control unit (16') being connected to a photometer unit (18) for controlling the liquid sample filling level within the cuvette cavity (25).
